# EUROPEAN PATENT SPECIFICATION

(11) **EP 1 856 422 B1**
(45) Date of publication and mention of the grant of the patent: **05.04.2017**
(21) Application number: 05714111.1
(22) Date of filing: 25.02.2005
(51) Int. Cl.: F16F 9/32, B60L 7/10, H02K 49/00, B60T 13/04, F16D 65/14

(54) **ELEVATOR BRAKE ACTUATOR HAVING A SHAPE-CHANGING MATERIAL FOR BRAKE CONTROL**
AUFZUGSBREMSSTELLGLIED MIT FORMÄNDERNDEM MATERIAL FÜR BREMSSTEUERUNG
ACTIONNEUR DE FREIN D'ASCENSEUR À MATERIAU À CHANGEMENT DE FORME POUR COMMANDER LE FREIN

(43) Date of publication of application: 21.11.2007
(73) Proprietor: Otis Elevator Company, Farmington, CT 06032 (US)
(72) Inventor: BARRIO, Rodolfo, Robledo, Mostoles (Madrid) 28933 (ES); GIANNINI, Gianfranco, 14163 Berlin (DE); GEWINNER, Jurgen, 10713 Berlin (DE); PIECH, Zbigniew, Wolcott, CT 06716 (US); HUBBARD, James, Kensington, CT 06037 (US); NOOR, Muhammad, Jehanzeb, Baltimore, MD 21230 (US)
(74) Representative: Ramsay, Laura Anne
(86) International application number: PCT/US2005/006264
(87) International publication number: WO 2006/093486

(56) References cited:
- DE-A1- 10 022 759
- JP-A- H06 294 423
- US-A- 4 854 424
- US-A- 5 090 518
- US-A- 5 231 887
- US-A- 5 255 760
- US-A- 5 645 143
- US-A- 6 053 287
- US-A1- 2002 100 646

## Description

### Field of the Invention

This invention generally relates to elevator brakes and, more particularly to elevator machine brakes including a piezoelectric brake actuator.

### Background of the Invention

Elevator systems are widely known and used. Typical arrangements include an elevator cab that moves between landings in a building, for example, to transport passengers or cargo to different levels in the building. A motorized elevator machine moves a rope or a belt, which typically supports the weight of the cab so that it moves through a hoistway.

The elevator machine includes a machine shaft rotationally driven by the machine motor. A sheave is supported on the machine shaft and rotates with the machine shaft. The ropes or belts are typically tracked through the sheave such that the machine motor may rotate the sheave in one direction to lower the cab and rotate the sheave in the opposite direction to raise the cab. The elevator machine typically includes a solenoid-actuated brake that engages a disk or flange that rotates with the machine shaft to hold the machine shaft and sheave when the cab is at a selected landing. US 5,255,760 provides an example of a safety disc brake for elevators. JP H06 294423 provides an example of a brake device and linear motor which uses a piezoelectric ceramic element to energise a pair of brake levers.

Operationally, the solenoid-actuated brake may be switched on or off to respectively engage or disengage the disk or flange associated with the machine shaft. Switching the solenoid-actuated brake on and off often produces undesirable noise as the brake contacts the disk or flange to apply a braldng force. Additionally, solenoid-actuated brakes may be considerably bulky and expensive, may produce excessive heat, and may require additional auxiliary parts to achieve a desired level of operation. One example auxiliary part is a proximity sensor to determine a position of the brake. Such parts add to the expense and maintenance of known solenoid-actuated brakes.

There is a need for a quieter, simplified and compact elevator machine brake. This invention addresses those needs and provides enhanced capabilities while avoiding the shortcomings and drawbacks of the prior art.

According to the present invention there is provided a method of controlling an elevator machine brake as defined by claim 1 and an elevator assembly as defined by claim 8.

An exemplary braking device useful in an elevator system selectively varies the braking force applied to a rotating portion of the elevator machine by controlling an influence on a shape-changing material of a brake actuator that controls engagement between a brake member and the rotating portion.

One example elevator machine includes a motor that rotationally drives a machine shaft. An elevator machine brake applies a braking force to a disk, which is coupled to the machine shaft, to control movement of an elevator car as it slows or stops rotation of the machine shaft. One example elevator machine brake includes a bias member that applies a bias force to cause engagement between a braking member and the disk. The brake actuator operates against the bias force to allow selective movement of the disk and shaft.

In one example, the brake actuator moves between a plurality of different braking positions. A controller determines the plurality of different braking positions and controls an input to the brake actuator.

According to the invention, the position of the brake actuator is determined based upon at least one of the influence on the brake actuator or an electric output from the brake actuator. The controller uses the electric input, a detected piezoelectric stack voltage or both, for example, to determine the position of the brake actuator and thus the position of a braking member relative to the rotating portion.

The various features and advantages of this invention will become apparent to those skilled in the art from the following detailed description of the currently preferred embodiments. The drawings that accompany the detailed description can be briefly described as follows.

### BRIEF DESCRIPTION OF THE DRAWINGS

Figure 1 is a cross-sectional view of an example elevator machine.
Figure 2 is a schematic, partial cross-sectional view of selected portions of the elevator brake portion of the elevator machine of Figure 1 in one operating condition.
Figure 3 is a schematic, partial cross-sectional view similar to Figure 2 but showing another operating condition.
Figure 4 is a schematic, partial cross-sectional view of selected portions of another example elevator brake.
Figure 5 is a schematic, partial cross-sectional view of selected portions of another embodiment of an example elevator brake.

### DETAILED DESCRIPTION OF THE PREFERRED EMBODIMENTS

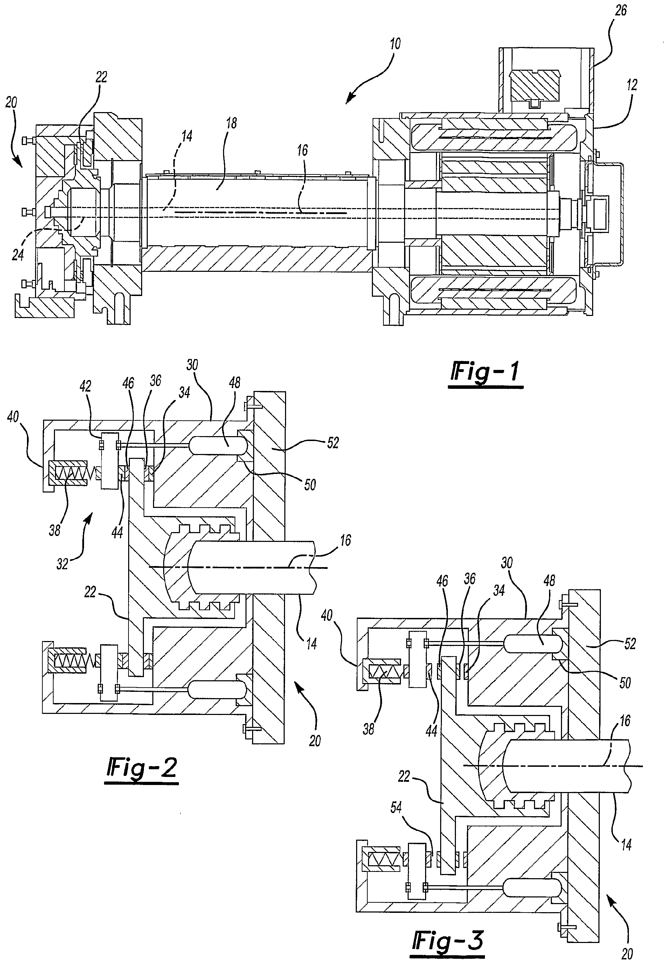

Figure 1 illustrates in cross-sectional view, an example elevator machine 10 including a motor 12 that rotationally drives a machine shaft 14 about an axis 16. A sheave 18 rotates with the machine shaft 14 about the axis 16. An elevator machine brake 20 selectively applies a braking force to a disk 22 that is coupled to an end portion 24 of the machine shaft 14 to slow or stop the rotation of the machine shaft 14. As known, such a machine (i.e., a motor and a brake) control the position or movement of an elevator car in a hoistway.

A controller 26 operates the motor 12 and the elevator machine brake 20. The controller 26 may be integrated with the elevator machine 10 or may be located remotely from the elevator machine 10. In one example, the controller 26 selectively controls power to the motor 12 and selectively varies the braking force that the elevator machine brake 20 applies to the disk 22.

Figure 2 shows one example elevator brake 20. This example includes a housing 30 that supports a generally known caliper arrangement 32. The example elevator brake 20 includes a brake pad 34 that frictionally engages a first braking surface 36 on the disk 22 to apply a braking force to the disk 22. The caliper arrangement 32 includes a bias member 38 such as a spring mounted in a rigid caliper arm 40. The bias member 38 is coupled to a linkage 42. The linkage 42 includes a caliper brake pad 44 that frictionally engages a second braking surface 46 on the disk 22.

The linkage 42 is operatively associated with a brake actuator 48 that is at least partially supported by an actuator housing 50. The actuator housing 50 is mounted on a rigid portion of the brake or machine assembly 52.

The bias member 38 applies a bias force to the linkage 42 that urges the caliper brake pad 44 towards the second braking surface 46 and the disk 22 toward the brake pad 34 to provide a braking force on both sides of the disk 22. A fully applied braking position is illustrated in Figure 2.

In one example, an applied influence such as an electric field, electric current, a voltage or a magnetic field, for example, controls the brake actuator 48 to move the linkage 42 against the bias force to reduce or eliminate the braking force on the disk 22, as illustrated in Figure 3. The bias force normally applies a braking force to the disk 22. Controlling the influence on the brake actuator 48 controls the amount of movement of the linkage 42 and, therefore, the magnitude of the braking force.

The illustrated brake actuator 48 comprises a known shape-changing material that changes shape in response to the selected influence. The shape change is not necessarily a change in geometrical shape. Rather, the crystal or molecular structure of the material changes shape responsive to the applied influence in a known manner. Such a shape change often results in an elongation or contraction of the material within the actuator 48.

In one example, the material of the brake actuator 48 changes shape by expanding in response to the applied influence to move the linkage 42 against the bias force to reduce or eliminate the braldng force on the disk 22. When the influence is removed, the material contracts and the bias force applies the braking force to the disk 22.

In another example, the material expands to apply the braking force.

In one example, the shape-changing material of the brake actuator 48 includes a known piezoelectric material. As known, piezoelectric material changes shape in response to an electrical input, such as an electric current or a voltage. The change in the shape is proportional to the magnitude of the electrical input and the change may be positive or negative (i.e., expanding in a nominal direction or contracting in the nominal direction) depending on the polarity of the electrical input, for example.

In another example, the shape-changing material of the brake actuator 48 includes a known magnetostrictive material. As known, magnetostrictive material changes shape in response to a magnetic field. The change in shape typically is proportional to the magnitude of the magnetic field. The shape change may be positive or negative (i.e., expanding in a nominal direction or contracting in the nominal direction) depending on the orientation of the magnetic field, for example.

Other examples include an electrorestrictive material that changes responsive to an electrical influence in a controllable or periodic manner. A variety of such materials are known.

One feature of the example brake actuator 48 that is advantageous is the relatively small size of the brake actuator 48 compared to solenoid actuators. The small size of the brake actuator 48 reduces the amount of design space required in the elevator brake 20, consumes less energy, and provides a longer usage life. Moreover, the light weight of the brake actuator 48 reduces the overall weight of the elevator brake 20 compared to previously known elevator brakes.

An actuator having a shape-changing material has advantages compared to solenoid actuators used in known elevator machine brakes. For example, the actuator 48 having a shape-changing material is selectively and precisely controllable to precisely control the magnitude of a braking force. This allows for avoiding the noises associated with known arrangements where the brake pads were either fully applied or fully released with no gradual control of movement between those positions. It is known that the amount of influence (i.e., electrical current) provided to the shape-changing material, for example a piezoelectric stack, changes the size of the stack (i.e., causes expansion or contraction). In the example of Figures 2 and 3, the controller 26 precisely controls the braking forces by precisely controlling the influence on the actuator 48.

In one example, the brake actuator 48 moves the linkage 42 between a plurality of different braking positions. The plurality of different braking positions result from different influences on the brake actuator 48. In one example, the controller 26 determines a required initial braking force in a braking application and activates the brake actuator 48 with a corresponding influence on the brake actuator 48 to generate the required braking force on the disk 22. If the initial braking force is not adequate to slow or stop the rotating machine shaft 14 as the car approaches its destination, the controller determines a second, greater braking force and changes the influence to generate the greater braking force. Such gradual brake application reduces noise and enhances passenger comfort and ride quality such gradual brake application was not possible with previous, known actuators.

In another example, the controller 26 selectively varies the braking force to gradually increase or decrease the braking force applied to the disk 22. Selectively varying the braking force may advantageously reduce noise in the elevator machine brake 20 and allow smoother movement of an elevator cab.

Compared to prior art elevator machine brakes, utilizing the example brake actuator 48 may allow reducing a gap 54 between the brake pads 36, 46 and the braking surfaces on the disk 22, thereby further reducing any "clamping" noise that otherwise occurs upon engagement between the brake pads 34, 44 and the disk 22.

In other examples, the controller 26 selectively varies the braking force in response to an emergency situation. Emergency situations may occur when an elevator cab is in free fall, for example. A selected influence on the brake actuator 48 moves the linkage 42 in the direction of the bias force to supplement the bias force and provides a gradually applied additional emergency braking force on the disk 22 in a free fall situation. This type of control enhances passenger comfort as known emergency stopping devices are not capable of gradual brake force application but the illustrated actuators 48 are.

Positively or negatively energizing the brake actuator 48 may also be utilized to move the linkage 42 in a manner to release it from a stuck, engaged or disengaged position, for example. For example, a positive voltage may be used during brake applications. If the brake is stuck in an applied position, a negative voltage can be applied to cause a reverse response by the shape-changing material to release the brake components. Using the actuators 48 in this manner can reduce a need for manual maintenance procedures.

Another feature of the disclosed examples is that the actuators 48 provide position information regarding the brake components. This eliminates the need for additional position sensors.

The condition of the brake actuator 48, and thus the position of the linkage 42 and the brake pads relative to the disk 22, is determined based upon at least one of the selected influence on the brake actuator 48 or a measurable output from the brake actuator 48. In one example, the brake actuator 48 includes a piezoelectric material and the controller 26 uses the electric influence or an electric output such as a voltage level from the piezoelectric material to determine the position of the linkage 42 relative to the disk 22. That is, predetermined input or output values correspond to predetermined piezoelectric material conditions and corresponding brake positions such that for a given input or output, the brake actuator 48 position can be determined. Given this description, those skilled in the art will realize how to use such information to make position determinations for their particular brake arrangement.

In other examples, the controller 26 uses a piezoelectric actuator voltage output to monitor and correct for brake pad wear. The piezoelectric actuator voltage outputs correspond to predetermined positions for applying a braking force such that the controller 26 detects brake pad wear when the actual position for a given input is different than an expected position (as determined from the output voltage). In one example, when the controller 26 detects a different than expected actual position (i.e., brake pad wear), the controller 26 automatically adjusts control parameters to provide desired braking, provides a service indication regarding the detected brake pad wear, or both.

In other examples, the controller 26 uses the position information to detect whether the shape-changing material of the brake actuator 48 is effective for applying a braking force and to ensure that the motor 12 is not driving through the applied braking force.

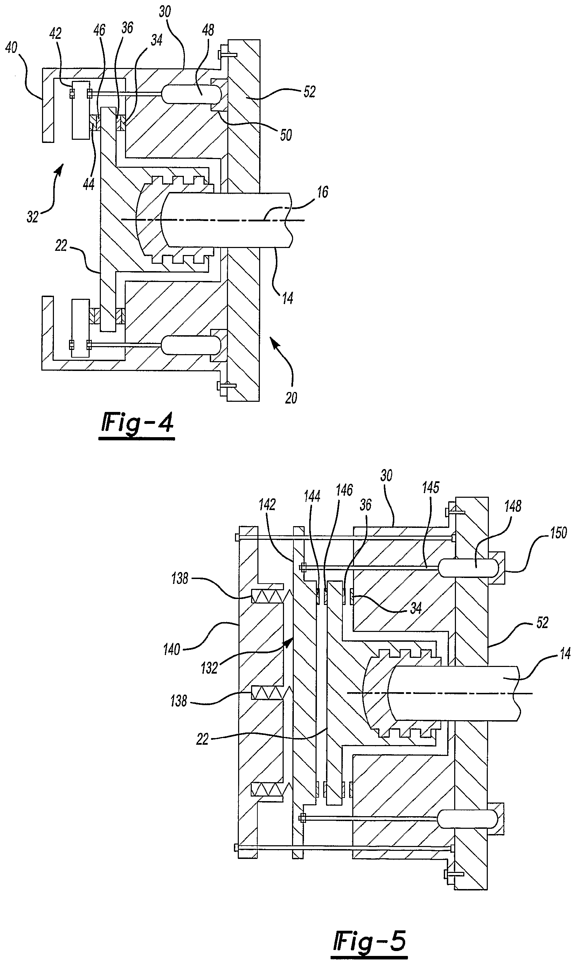

Figure 4 illustrates another embodiment of an elevator brake including a disk braking member 132. Bias members 138 are mounted in a rigid bias plate 140. The bias members 138 urge a brake disk 142, which includes a brake pad 144, to apply a braking force to the disk 22. A linkage 145 is associated with brake actuators 148, which operate much the same as the brake actuators 48 to selectively apply a braking force to the disk 22. The brake actuators 148 in this example move the disk braking member 132 against a bias force of the bias members 138.

Figure 5 illustrates another example elevator brake 20 without a bias member 38. The controller 26 in this example selectively influences the shape-changing material of the brake actuator 48 to disengage the brake pads 34, 44 from the disk 22. When the influence on shape-changing material is removed, for example when the controller selects not to energize or during an electrical power failure, the brake pads 34, 44 engage the disk 22 to provide a braking force. Thus, the controller 26 may exclusively use the brake actuators 48 to control the braking force without requiring a separate bias member such as a mechanical spring. Alternatively, the controller 26 may selectively influence the shape-changing material to contract the material to provide the braking force on the disk 22. In examples that utilize known stacks of shape-changing materials, the strength between stacked layers is sufficient to withstand the cyclic application and removal of the braking forces.

One feature of the example elevator brake 20 without the bias member 38 that may provide an advantage is the added size advantage. Without the bias member 38, the rigid caliper arm 40 is reduced in size (i.e., the rigid caliper arm 40 is moved closer to the disk 22). The compact size of the piezoelectric brake actuator 48 may reduce the amount of design space required in the elevator brake 20. Additionally, the lighter weight without the bias member 38 and associated structural support components may reduce the overall weight and cost of the elevator brake 20 compared to previously known elevator brakes.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of controlling an elevator machine brake (20) having a braking member (42, 44) that engages an elevator machine rotating portion (22), **characterised by** comprising:
selectively controlling a braking force applied by the braking member (42, 44) by controlling an influence on a brake actuator material that changes shape in response to the influence for controlling engagement between the braking member (42, 44) and the elevator machine rotating portion (22); and
determining a position of the braking member (42, 44) relative to the rotating portion (22) based upon at least one of a magnitude of the influence or output from the material.

2. The method as recited in Claim 1, comprising applying at least one of an electrical or a magnetic influence to the shape-changing material.

3. The method as recited in Claim 1 or 2, comprising varying a magnitude of the influence to move the braking member (42, 44) to a corresponding plurality of different braking positions.

4. The method as recited in any of Claims 1, 2 or 3, wherein the material comprises at least one of a piezoelectric, magnetostrictive, or electrostrictive material.

5. The method as recited in any preceding Claim, wherein the braking member (42, 44) is biased to engage the rotating portion (22) and comprising selectively influencing the material to change the shape of the material to act against the bias.

6. The method as recited in any preceding Claim, comprising using an electric current associated with the influence for determining the position of the braking member (42, 44) relative to the rotating portion (22).

7. The method as recited in any of Claims 1-5, comprising using an electric voltage associated with the output from the material for determining the position of the braking member (42, 44) relative to the rotating portion (22).

8. An elevator assembly comprising an elevator machine (10), a controller (26) and a braking device (20), having an elevator brake actuator (48) and a braking member (42, 44) that is movable to resist rotation of an elevator machine rotatable portion (22), **characterised in that**:
the elevator brake actuator (48) includes a material that changes shape in response to a selected influence to control a braking force on the elevator machine rotatable portion (22); and
the controller (26) is in communication with said brake actuator (48) for controlling said influence and determines a position of the braking member (42, 44) based on said influence.

9. The device of Claim 8, wherein the shape change includes at least one of an expansion of said material to alter the braking force in a first direction and a retraction of said material to alter the braking force in an opposite direction.

10. The device of Claim 8 or 9, wherein said material includes at least one of a piezoelectric, electrostrictive, or a magnetostrictive material.

11. The device of any of Claims 8, 9 or 10, wherein said brake actuator (48) is moveable between a plurality of applied braking positions corresponding to a plurality of applied braking forces.

12. The device of any of Claims 9-11, wherein said brake actuator (48) moves a braking member (42, 44) that engages the elevator machine rotatable portion (22) and said material controls a position of said braking member (42, 44).

13. The device of any of Claims 9-12, wherein the controller (26) determines a position of a braking member (42, 44) that is moveable to resist rotation of the elevator machine rotatable portion (22) based on an electrical output from the material.

14. The device of any of Claims 9-13, wherein the influence comprises at least one of an electric current, an electric field, a voltage or a magnetic field.

## Patentansprüche

1. Verfahren zur Steuerung einer Aufzugsmaschinenbremse (20), die ein Bremsglied (42, 44) aufweist, das mit einem Aufzugsmaschinendrehabschnitt (22) in Eingriff tritt, **dadurch gekennzeichnet, dass** es Folgendes umfasst:
selektives Steuern einer Bremskraft, die von dem Bremsglied (42, 44) ausgeübt wird, durch das Steuern eines Einflusses auf ein Bremsstellgliedmaterial, das als Reaktion auf den Einfluss zum Steuern des Eingriffs zwischen dem Bremsglied (42, 44) und dem Aufzugsmaschinendrehabschnitt (22) die Form ändert; und
Bestimmen einer Position des Bremsglieds (42, 44) relativ zu dem Drehabschnitt (22) basierend auf mindestens einem einer Größenordnung des Einflusses oder Ausgangs von dem Material.

2. Verfahren nach Anspruch 1, umfassend Ausüben mindestens eines von einem elektrischen oder magnetischen Einfluss auf das formändernde Material.

3. Verfahren nach Anspruch 1 oder 2, umfassend Variieren einer Größenordnung des Einflusses, um das Bremsglied (42, 44) zu einer entsprechenden Vielzahl von verschiedenen Bremspositionen zu bewegen.

4. Verfahren nach einem der Ansprüche 1, 2 oder 3, wobei das Material mindestens eines von einem piezoelektrischen, magnetostriktiven oder elektrostriktiven Material umfasst.

5. Verfahren nach einem der vorhergehenden Ansprüche, wobei das Bremsglied (42, 44) vorgespannt ist, um mit dem Drehabschnitt (22) in Eingriff zu treten, und umfassend selektives Beeinflussen des Materials, um die Form des Materials zu verändern, um gegen die Vorspannung zu wirken.

6. Verfahren nach einem der vorhergehenden Ansprüche, umfassend Verwenden eines elektrischen Stroms in Zusammenhang mit dem Einfluss zum Ermitteln der Position des Bremsglieds (42, 44) relativ zu dem Drehabschnitt (22).

7. Verfahren nach einem der Ansprüche 1 - 5, umfassend Verwenden einer elektrischen Spannung in Zusammenhang mit dem Ausgang von dem Material zum Ermitteln der Position des Bremsglieds (42, 44) relativ zu dem Drehabschnitt (22).

8. Aufzuganordnung, umfassend eine Aufzugmaschine (10), eine Steuerung (26) und eine Bremsvorrichtung (20), die ein Aufzugsbremsstellglied (48) und ein Bremsglied (42, 44) aufweist, das beweglich ist, um der Drehung eines Aufzugsmaschinendrehabschnitts (22) entgegenzuwirken, **dadurch gekennzeichnet, dass**:
das Aufzugsbremsstellglied (48) ein Material enthält, das als Reaktion auf einen ausgewählten Einfluss die Form ändert, um eine Bremskraft auf den Aufzugsmaschinendrehabschnitt (22) zu steuern; und
die Steuerung (26) in Verbindung mit dem Bremsstellglied (48) ist, um den Einfluss zu steuern, und eine Position des Bremsglieds (42, 44) auf der Basis des Einflusses ermittelt.

9. Vorrichtung nach Anspruch 8, wobei die Formänderung mindestens eines von einer Erweiterung des Materials, um die Bremskraft in einer ersten Richtung zu ändern, und einem Zurückziehen des Materials enthält, um die Bremskraft in einer entgegengesetzten Richtung zu ändern.

10. Vorrichtung nach Anspruch 8 oder 9, wobei das Material mindestens eines von einem piezoelektrischen, elektrostriktiven oder magnetostriktiven Material umfasst.

11. Vorrichtung nach einem der Ansprüche 8, 9 oder 10, wobei das Bremsstellglied (48) zwischen einer Vielzahl von angewendeten Bremspositionen entsprechend einer Vielzahl von angewendeten Bremskräften beweglich ist.

12. Vorrichtung nach einem der Ansprüche 9 - 11, wobei das Bremsstellglied (48) ein Bremsglied (42, 44) bewegt, das mit dem Aufzugsmaschinendrehabschnitt (22) in Eingriff tritt, und das Material eine Position des Bremsglieds (42, 44) steuert.

13. Vorrichtung nach einem der Ansprüche 9 - 12, wobei die Steuerung (26) eine Position eines Bremsglieds (42, 44) festlegt, das beweglich ist, um einer Drehung des Aufzugsmaschinendrehabschnitts (22) auf der Basis eines elektrischen Ausgangs von dem Material entgegenzuwirken.

14. Vorrichtung nach einem der Ansprüche 9 - 13, wobei der Einfluss mindestens eines von einem elektrischen Strom, einem elektrischen Feld, einer Spannung oder einem Magnetfeld umfasst.

## Revendications

1. Procédé de commande d'un frein d'ascenseur (20) ayant un élément de freinage (42, 44) qui vient en prise avec une partie tournante de l'ascenseur (22) caractérisé en qu'il comprend :
la commande sélective d'une force de freinage appliquée par l'élément de freinage (42, 44) en commandant une influence sur un matériau d'actionneur de frein qui change de forme en réponse à l'influence pour commander l'entrée en prise entre l'élément de freinage (42, 44) et la partie tournante de l'ascenseur (22) ; et
la détermination d'une position de l'élément de freinage (42, 44) par rapport à la partie tournante (22) sur la base d'au moins l'une d'une importance de l'influence ou de la sortie depuis le matériau.

2. Procédé selon la revendication 1, comprenant l'application d'au moins l'une d'une influence électrique ou d'une influence magnétique au matériau à changement de forme.

3. Procédé selon la revendication 1 ou 2, comprenant la modification d'une importance de l'influence pour déplacer l'élément de freinage (42, 44) jusqu'à une pluralité correspondante de positions de freinage différentes.

4. Procédé selon l'une quelconque des revendications 1, 2 ou 3, dans lequel le matériau comprend au moins l'un d'un matériau piézoélectrique, magnétostrictif ou électrostrictif.

5. Procédé selon une quelconque revendication précédente, dans lequel l'élément de freinage (42, 44) est sollicité pour venir en prise avec la partie tournante (22) et comprenant l'influence sélective du matériau pour changer la forme du matériau afin d'agir contre la sollicitation.

6. Procédé selon une quelconque revendication précédente, comprenant l'utilisation d'un courant électrique associé à l'influence pour déterminer la position de l'élément de freinage (42, 44) par rapport à la partie tournante (22).

7. Procédé selon l'une quelconque des revendications 1 à 5, comprenant l'utilisation d'une tension électrique associée à la sortie depuis le matériau pour déterminer la position de l'élément de freinage (42, 44) par rapport à la partie tournante (22).

8. Ensemble ascenseur comprenant un ascenseur (10), un dispositif de commande (26) et un dispositif de freinage (20), ayant un actionneur de frein d'ascenseur (48) et un élément de freinage (42, 44) qui peut être déplacé pour résister à la rotation d'une partie tournante d'un ascenseur (22), **caractérisé en ce que** :
l'actionneur de frein d'ascenseur (48) comprend un matériau qui change de forme en réponse à une influence sélectionnée pour commander une force de freinage sur la partie tournante de l'ascenseur (22) ; et
le dispositif de commande (26) est en communication avec ledit actionneur de frein (48) pour commander ladite influence et détermine une position de l'élément de freinage (42, 44) sur la base de ladite influence.

9. Dispositif selon la revendication 8, dans lequel le changement de forme comprend au moins l'une d'une expansion dudit matériau pour modifier la force de freinage dans une première direction et d'une rétraction dudit matériau pour modifier la force de freinage dans une direction opposée.

10. Dispositif selon la revendication 8 ou 9, dans lequel ledit matériau comprend au moins l'un d'un matériau piézoélectrique, électrostrictif ou magnétostrictif.

11. Dispositif selon l'une quelconque des revendications 8, 9 ou 10, dans lequel ledit actionneur de frein (48) peut être déplacé entre une pluralité de positions de freinage appliquées correspondant à une pluralité de forces de freinage appliquées.

12. Dispositif selon l'une quelconque des revendications 9 à 11, dans lequel ledit actionneur de frein (48) déplace un élément de freinage (42, 44) qui vient en prise avec la partie tournante de l'ascenseur (22) et ledit matériau commande une position dudit élément de freinage (42, 44).

13. Dispositif selon l'une quelconque des revendications 9 à 12, dans lequel le dispositif de commande (26) détermine une position d'un élément de freinage (42, 44) qui peut être déplacé pour résister à la rotation de la partie tournante de l'ascenseur (22) sur la base d'une sortie électrique depuis le matériau.

14. Dispositif selon l'une quelconque des revendications 9 à 13, dans lequel l'influence comprend au moins l'un d'un courant électrique, d'un champ électrique, d'une tension ou d'un champ magnétique.
